# EUROPEAN PATENT APPLICATION

(11) **EP 4 220 779 A1**
(43) Date of publication of application: **02.08.2023**
(21) Application number: 22778711.6
(22) Date of filing: 24.03.2022
(51) Int. Cl.: H01M 4/66

(54) **CURRENT COLLECTOR AND PREPARATION METHOD THEREFOR, AND SECONDARY BATTERY AND APPARATUS**

(30) Priority: 01.04.2021 CN 202110359020
(71) Applicant: Contemporary Amperex Technology Co., Limited, Ningde, Fujian 352100 (CN)
(72) Inventor: HU, Bobing, Ningde, Fujian 352100 (CN); HUANG, Shengyuan, Ningde, Fujian 352100 (CN); LIU, Chengyong, Ningde, Fujian 352100 (CN); FU, Jiawei, Ningde, Fujian 352100 (CN); HE, Xiaoning, Ningde, Fujian 352100 (CN); ZOU, Jieliang, Ningde, Fujian 352100 (CN); ZHONG, Chengbin, Ningde, Fujian 352100 (CN)
(74) Representative: Gong, Jinping
(86) International application number: PCT/CN2022/082661
(87) International publication number: WO 2022/206528

(57) **Abstract**

This application discloses a current collector, a preparation method thereof, a secondary battery, and an apparatus. The current collector includes: a current collector body; and a lithiophilic layer applied on surface of the current collector body, where the lithiophilic layer has lithium affinity and includes multiple lithiophilic materials, the lithiophilic materials include an internal structure and an external structure, and the internal structure is a cavity. When the current collector according to this application is used in a secondary battery, lithium dendrites can be effectively suppressed.

## Description

This application refers to Chinese Patent Application No. 202110359020.8, filed on April 1, 2021 and entitled "CURRENT COLLECTOR AND PREPARATION METHOD THEREOF, SECONDARY BATTERY, AND APPARATUS", which is incorporated herein by reference in its entirety.

### TECHNICAL FIELD

This application pertains to the field of batteries, and relates to a current collector and a preparation method thereof. This application further relates to a secondary battery containing such current collector, and an apparatus containing such secondary battery.

### BACKGROUND

Lithium metal (Li) has advantages such as extremely high theoretical specific capacity (3860 mAh•g⁻¹), minimum reduction potential (-3.04 V vs. standard hydrogen electrode), minimum atomic radius, and low density (0.534 g•cm⁻³). However, during precipitation of lithium metal, lithium dendrites grow inevitably, causing huge safety risks in use of lithium metal batteries.

From the perspective of current collectors, it is an effective method to design lithiophilic metal current collectors with nanostructure or microstructure. First, metal current collectors with nanostructure or microstructure can provide more abundant sites for lithium precipitation, thereby suppressing the generation of lithium dendrites. Second, lithiophilic current collectors can reduce nucleation of lithium precipitation, helping to reduce the energy barrier of lithium precipitation. However, although applying lithiophilic current collectors on the surface of substrates can improve uniformity of lithium precipitation, this method has the following problems: first, metal current collectors with nanostructure or microstructure are too expensive to implement mass production in preparation; and second, even if the surface of existing current collectors is plated with a lithiophilic material layer, lithium metal is still precipitated on the surface of the lithiophilic material, and lithium dendrites are still inevitably generated when precipitation reaches a specific extent, severely affecting the cycling and safety performance of batteries.

Therefore, the foregoing problems of metal current collectors need to be resolved urgently for lithium metal batteries.

### SUMMARY

Considering the problems described in the Background, this application aims to provide a current collector, a preparation method of current collector, a secondary battery containing such current collector, and an apparatus containing such secondary battery. The current collector can effectively suppress lithium dendrites when used in secondary batteries.

To achieve the foregoing objectives, a first aspect of this application provides a current collector, including:
a current collector body; and
a lithiophilic layer applied on surface of the current collector body, where the lithiophilic layer has lithium affinity and includes multiple lithiophilic materials, the lithiophilic materials include an internal structure and an external structure, and the internal structure is a cavity.

A second aspect of this application provides a preparation method of current collector, including the following steps:
(1) providing materials with a composite structure, where
   the material with a composite structure has an internal structure and an external structure, a material of the internal structure is a metal A, and a material of the external structure is a metal B and/or B oxide with lithium affinity, where the metal A is metal copper or selected from metals whose oxidation potential is lower than the metal copper, and the metal B is selected from metals whose oxidation potential is higher than the metal A;
(2) letting multiple materials with a composite structure react with an acid solution to form multiple lithiophilic materials with lithium affinity, where the lithiophilic material includes an internal structure and an external structure, and the internal structure is a cavity; and
(3) applying the multiple lithiophilic materials on surface of a current collector body.

A third aspect of this application provides a secondary battery, including the current collector according to the first aspect of this application or the preparation method of current collector according to the second aspect of this application.

A fourth aspect of this application provides an apparatus, including the secondary battery according to the third aspect of this application.

This application has the following beneficial effects:

The metal current collector based on lithium metal battery of this application solves problems such as many generated lithium dendrites for current collectors. Silver microparticles whose internal structure is a cavity are used as an example. This material is made by using currently commercialized silver-coated copper microparticles as the raw material, and corroding the intermediate copper layer with an acid solution to form a cavity structure. Due to lithium affinity of the silver shell layer, lithium metal can be precipitated into the cavity structure during charge and discharge. As compared with silver coating, this method is not only simple to operate, but also can accurately limit the space for lithium precipitation, greatly suppressing the growth of lithium dendrites, thereby significantly improving cycling performance of batteries. In addition, as compared with ordinary three-dimensional current collectors, the closed space structure in the silver shell can effectively reduce electrolyte consumed during lithium precipitation, which is beneficial to the long-term operation of batteries.

### BRIEF DESCRIPTION OF DRAWINGS

To describe the technical solutions in embodiments of this application more clearly, the following briefly describes the accompanying drawings required for describing the embodiments of this application. Apparently, the accompanying drawings in the following description show merely some embodiments of this application, and a person of ordinary skill in the art may still derive other drawings from the accompanying drawings without creative efforts.
FIG. 1 is a schematic diagram of a preparation process of current collector according to Example 1 of this application.
FIG. 2 is a schematic diagram of a preparation process of current collector according to Example 11 of this application.
FIG. 3 shows an example of lithium being precipitated into a silver shell layer with cavity structure in a charge and discharge process of Example 1 of this application.
FIG. 4 shows an example of lithium being precipitated into a silver shell layer with cavity structure in a charge and discharge process of Example 11 of this application.
FIG. 5 shows an example of lithium being precipitated onto surface of silver-coated copper powder with no cavity structure in a charge and discharge process of Comparative Example 1.
FIG. 6 shows an example of lithium being precipitated onto surface of a current collector and lithium dendrites being generated in a charge and discharge process of Comparative Example 3.
FIG. 7 is a comparison diagram of performance of batteries in Example 1, Comparative Example 1, Comparative Example 2, and Comparative Example 3 of this application.

### DESCRIPTION OF EMBODIMENTS

The following further describes this application with reference to specific embodiments. It should be understood that these specific embodiments are merely intended to illustrate this application but not to limit the scope of this application.

For brevity, this specification specifically discloses only some numerical ranges. However, any lower limit may be combined with any upper limit to form a range not explicitly recorded, and any lower limit may be combined with another lower limit to form a range not explicitly recorded, and likewise, any upper limit may be combined with any other upper limit to form a range not explicitly recorded. In addition, each individually disclosed point or single numerical value, as a lower limit or an upper limit, may be combined with any other point or single numerical value or combined with another lower limit or upper limit to form an unspecified range.

In the descriptions of this specification, it should be noted that "more than" and "less than" are inclusive of the present number and that "more" in "one or more" means two or more than two, unless otherwise specified.

Unless otherwise specified, terms used in this application have common meanings generally understood by persons skilled in the art. Unless otherwise specified, numerical values of parameters mentioned in this application may be measured by using various measurement methods commonly used in the art (for example, testing may be performed by using a method provided in the embodiments of this application).

The following details a current collector according to a first aspect of this application, a preparation method of current collector according to a second aspect of this application, a secondary battery according to a third aspect of this application, and an apparatus according to a fourth aspect of this application.

The current collector according to the first aspect of this application is described first, including:
a current collector body; and
a lithiophilic layer applied on surface of the current collector body, where the lithiophilic layer has lithium affinity and includes multiple lithiophilic materials, the lithiophilic materials include an internal structure and an external structure, and the internal structure is a cavity.

The inventors have found through research that in the current collector of this application, due to the lithium affinity of the shell layer, lithium metal can be precipitated into the cavity structure during charge and discharge, thereby greatly suppressing the growth of lithium dendrites, and significantly improving the cycling performance of batteries.

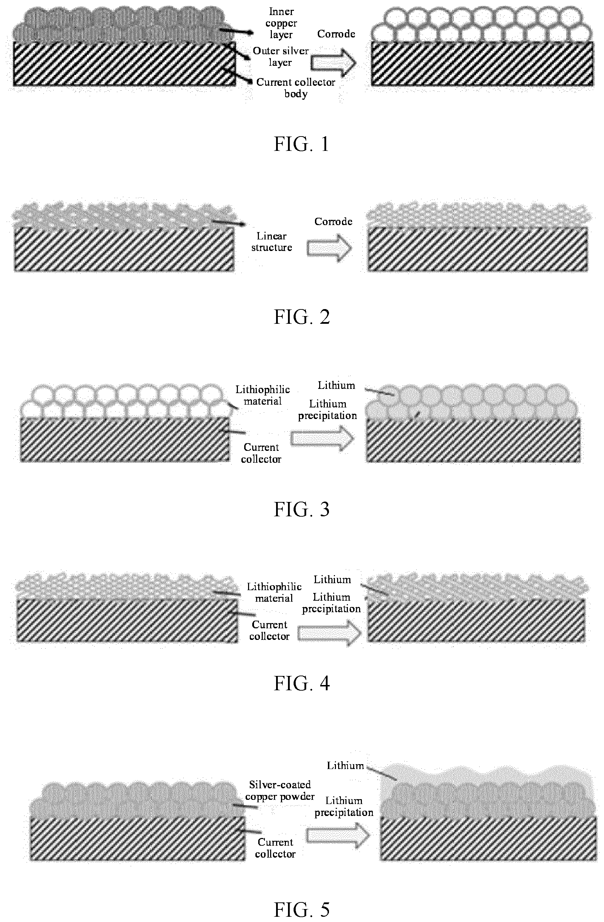

According to some embodiments of the current collector of this application, morphology of the external structure of the lithiophilic material is selected from one or more of granular structure, linear structure, plate structure, spherical shape, and near-spherical shape. FIG. 1 shows an example of an embodiment of a current collector according to this application, where an external structure of a lithiophilic material is a granular structure. FIG. 2 shows an example of a schematic diagram of an embodiment of a current collector according to this application, where an external structure of a lithiophilic material is a linear structure. Embodiments of the current collector according to this application are not limited thereto. The foregoing external structure may be a nano-scale structure or a micro-scale structure. Preferably, selecting the foregoing structure can increase a specific surface area of the lithiophilic material. This can increase sites for active reaction during lithium precipitation, and reduce current density, thereby facilitating uniform distribution of electrons, and improving uniformity of lithium precipitation.

According to some embodiments of the current collector of this application, an average thickness of the external structure of the lithiophilic material is 0.05-2 µm, and preferably 0.1-1 µm. In this application, the average thickness of the external structure refers to an average value of multiple thicknesses of the external structure, for example, 0.05 µm, 0.07 µm, 0.1 µm, 0.3 µm, 0.5 µm, 0.7 µm, 1 µm, 1.3 µm, 1.5 µm, 1.7 µm, 2 µm, and any value therebetween. Preferably, the average thickness of the external structure falling within the range defined in this application can help the lithiophilic material to maintain a stable cavity structure, and allow diffusion of lithium ions into the internal cavity through the external structure so that lithium ions are precipitated in the internal cavity structures.

According to some embodiments of the current collector of this application, a material of the external structure of the lithiophilic material is metal and/or metal oxide with lithium affinity, and preferably selected from one or more of gold, silver, platinum, and silver oxide. In this application, a material of the external structure of the current collector may be a product of reaction between one or more of silver-coated tin powder, silver-coated zinc powder, silver-coated iron powder, silver-coated aluminum powder, silver-coated copper powder, gold-coated tin powder, gold-coated zinc powder, gold-coated iron powder, gold-coated aluminum powder, gold-coated copper powder, platinum-coated tin powder, platinum-coated zinc powder, platinum-coated iron powder, platinum-coated aluminum powder, and platinum-coated copper powder and an acid solution (sulfuric acid and/or hydrochloric acid). Preferably, the material of the external structure of the lithiophilic material has good oxidation resistance so as not to react with the acid solution during acid treatment, maintaining the stability of the external structure, thereby forming the lithiophilic material with the cavity structure.

According to some embodiments of the current collector of this application, the thickness of the lithiophilic layer is 1-500 µm, and preferably 10-100 µm. In this application, the thickness of the lithiophilic layer is an overall thickness of the outer lithiophilic layer, for example, 1 µm, 10 µm, 50 µm, 100 µm, 200 µm, 300 µm, 400 µm, 500 µm, and any value therebetween. Preferably, with the thickness of the lithiophilic layer falling within the range defined in this application, all lithium ions transported from a positive electrode can be accommodated, and lithium ions are precipitated in the cavity structure of the lithiophilic material, thereby effectively suppressing battery volume change caused by lithium precipitation. An appropriate thickness of the lithiophilic layer can reduce adverse effects on mass energy density and volumetric energy density.

According to some embodiments of the current collector of this application, the current collector body is metal foil, and preferably copper foil.

In a second aspect, this application provides a preparation method of current collector, including the following steps:
(1) providing materials with a composite structure, where
   the material with a composite structure has an internal structure and an external structure, a material of the internal structure is a metal A, and a material of the external structure is a metal B and/or B oxide with lithium affinity, where the metal A is metal copper or selected from metals whose oxidation potential is lower than the metal copper, and the metal B is selected from metals whose oxidation potential is higher than the metal A;
(2) letting multiple materials with a composite structure react with an acid solution to form multiple lithiophilic materials with lithium affinity, where the lithiophilic material includes an internal structure and an external structure, and the internal structure is a cavity; and
(3) applying the multiple lithiophilic materials on surface of a current collector body.

The preparation method in this application is simple to operate, and can accurately limit the space for lithium precipitation, greatly suppressing the growth of lithium dendrites, thereby significantly improving cycling performance of batteries.

According to some embodiments of the preparation method of this application, the metal A is selected from one or more of tin, zinc, iron, aluminum, and copper. In this application, the selected metal A has low oxidation resistance, and undergoes oxidation-reduction reaction with an acid solution during acid treatment to form an internal cavity structure.

According to some embodiments of the preparation method of this application, the metal B is one or more of gold, silver, and platinum. In this application, the selected metal B has high oxidation resistance so as not to react with an acid solution during acid treatment, thereby maintaining the stability of the external structure.

According to some embodiments of the preparation method of this application, preferably, the material with a composite structure is one or more of silver-coated tin powder, silver-coated zinc powder, silver-coated iron powder, silver-coated aluminum powder, silver-coated copper powder, gold-coated tin powder, gold-coated zinc powder, gold-coated iron powder, gold-coated aluminum powder, gold-coated copper powder, platinum-coated tin powder, platinum-coated zinc powder, platinum-coated iron powder, platinum-coated aluminum powder, and platinum-coated copper powder. In this application, the selected material with a composite structure can selectively dissolve an internal material with low oxidation resistance through acid treatment, while maintaining a stable external structure, thereby forming a lithiophilic material with an internal cavity structure.

According to some embodiments of the preparation method of this application, based on a total weight of the materials with a composite structure, amount of the metal B is 1wt% to 10wt%. for example, 1wt%, 2wt%, 3wt%, 4wt%, 5wt%, 6wt%, 7wt%, 8wt%, 9wt%, 10wt%, and any value therebetween. In this application, the amount of the metal B needs to be high enough to maintain the stability of the lithiophilic material with a cavity structure, and also needs to be controlled not to be too high because a too high amount suppresses the formation of the internal cavity structure, and such suppressing does not help achieve the purpose of lithium precipitation in the cavity structure.

According to some embodiments of the preparation method of this application, potential of the acid solution is between potentials of the internal structure and the external structure, and preferably selected from sulfuric acid and/or hydrochloric acid. In this application, a proper solution such as concentrated sulfuric acid is used to corrode the raw material. The potential of the solute in the solution is between potentials of the inner and outer layers of the raw material, so that the solution reacts only with the inner layer of the raw material but not the outer layer, forming a lithiophilic layer whose internal structure is a cavity.

According to some embodiments of the preparation method of this application, the external structure of the material with a composite structure has nano-scale pores for lithium ions and/or hydrogen ions to pass through the external structure and enter the internal structure.

According to some embodiments of the preparation method of this application, the applying method in step (3) includes mixing the multiple lithiophilic materials with a dispersion liquid, and applying the mixture on the surface of the current collector body to form the lithiophilic layer on the surface of the current collector body. In this application, the number of multiple lithiophilic materials is not particularly limited provided that the lithiophilic layer has the desired thickness.

According to some embodiments of the preparation method of this application, the dispersion liquid includes but is not limited to water, ethanol, ethylene glycol, N-methylpyrrolidone, and N,N-dimethylformamide. The dispersion liquid may be a mixture of one or more of the foregoing substances.

According to some embodiments of the preparation method of this application, a weight ratio of the current collector and the dispersion liquid has a wide selection range, provided that the resulting mixture can be evenly applied on the surface of the current collector body.

According to some embodiments of the preparation method of this application, the coating method includes but is not limited to pulling method, film drawing method, electrostatic spraying method, spin coating method, and the like. The pulling method, film drawing method, electrostatic spraying method, and spin coating method may be conventional operations in the field, and details are not repeated herein.

According to some embodiments of the preparation method of this application, the method further includes drying after step (3), and preferably conditions for the drying include: temperature being 70°C-90°C, and time being 1 h-4 h.

According to a third aspect, this application provides a secondary battery, including the current collector according to the first aspect of this application or the preparation method of current collector according to the second aspect of this application. In a charge and discharge process of the battery, active ions are intercalated and deintercalated between a positive electrode plate and a negative electrode plate. The electrolyte conducts ions between the positive electrode plate and the negative electrode plate.

According to some embodiments of the secondary battery of this application, the battery is an alkali metal battery, and preferably a lithium metal battery, a potassium metal battery, or a sodium metal battery.

According to some embodiments of the secondary battery of this application, the secondary battery further includes a positive electrode, a negative electrode, an electrolyte, and a separator.

According to some embodiments of the secondary battery of this application, the negative electrode includes but is not limited to lithium metal, potassium metal, or sodium metal.

According to some embodiments of the secondary battery of this application, the positive electrode includes but is not limited to lithium iron phosphate, lithium cobaltate, lithium titanate, lithium nickel cobalt manganese oxide, and the like.

According to some embodiments of the secondary battery of this application, the electrolyte conducts ions between the positive electrode plate and the negative electrode plate. The electrolyte is not specifically limited to any particular type in this application, and may be selected based on a need. For example, the electrolyte may be selected from at least one of a solid electrolyte and a liquid electrolyte (that is, an electrolyte solution).

According to some embodiments of the secondary battery of this application, the electrolyte is an electrolyte solution. The electrolyte solution includes an electrolytic salt and a solvent.

According to some embodiments of the secondary battery of this application, the electrolytic salt may be one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bistrifluoromethanesulfonimide (LiTFSI), lithium trifluoromethanesulfonate (LiTFS), lithium difluoro(oxalato)borate (LiDFOB), lithium dioxalate borate (LiBOB), lithium difluorophosphate (LiPO₂F₂), lithium difluoro(dioxalato)phosphate (LiDFOP), and lithium tetrafluoro oxalato phosphate (LiTFOP).

According to some embodiments of the secondary battery of this application, the solvent may be selected from one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), methyl ethyl sulfone (EMS), and diethyl sulfone (ESE).

According to some embodiments of the secondary battery of this application, the electrolyte further includes an additive. For example, the additive may include a negative electrode film-forming additive, or may include a positive electrode film-forming additive, or may include an additive capable of improving some performance of the battery, for example, an additive for improving overcharge performance of the battery, an additive for improving high-temperature performance of the battery, or an additive for improving low-temperature performance of the battery.

According to some embodiments of the secondary battery of this application, secondary batteries using an electrolyte solution and some secondary batteries using a solid electrolyte further include a separator. The separator is disposed between the positive electrode plate and the negative electrode plate to provide separation. The separator is not limited to any specific type in this application, and may be any commonly known porous separator with high chemical stability and mechanical stability.

According to some embodiments of the secondary battery of this application, a material of the separator may be selected from one or more of glass fiber, non-woven fabric, polyethylene, polypropylene, and polyvinylidene fluoride. The separator may be a single-layer thin film or a multilayer composite thin film. When the separator is a multilayer composite thin film, each layer may be made of the same or different materials.

According to some embodiments of the secondary battery of this application, the positive electrode plate, the negative electrode plate, and the separator may be made into an electrode assembly through winding or lamination.

According to some embodiments of the secondary battery of this application, the secondary battery may include an outer package. The outer package is used for packaging the electrode assembly and the electrolyte.

According to some embodiments of the secondary battery of this application, the outer package of the secondary battery may be a hard shell, for example, a hard plastic shell, an aluminum shell, or a steel shell. The outer package of the secondary battery may alternatively be a soft package, for example, a soft pouch. A material of the soft pack may be plastic, for example, one or more of polypropylene (PP), polybutylene terephthalate (PBT), polybutylene succinate (PBS), and the like.

The secondary battery is not limited to a particular shape in this application, and may be cylindrical, rectangular, or of any other shapes.

According to some embodiments of the secondary battery of this application, the outer package may include a housing and a cover plate. The housing may include a base plate and side plates connected to the base plate, and the base plate and the side plates enclose an accommodating cavity. The housing has an opening communicating with the accommodating cavity, and the cover plate can cover the opening to close the accommodating cavity. A positive electrode plate, a negative electrode plate, and a separator may be made into an electrode assembly through winding or lamination. The electrode assembly is packaged in the accommodating cavity. The electrolyte solution infiltrates the electrode assembly. There may be one or more electrode assemblies in the secondary battery, and the quantity may be adjusted as required.

According to a fourth aspect, this application provides an apparatus. The apparatus includes the secondary battery according to the third aspect of this application. The secondary battery may be used as a power source of the apparatus or an energy storage unit of the apparatus. The apparatus in this application uses the secondary battery provided in this application, and therefore has at least the same advantages as the secondary battery.

The apparatus may be but is not limited to a mobile device (for example, a mobile phone or a laptop computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, an energy storage system, and the like.

For example, the apparatus may be a battery electric vehicle, a hybrid electric vehicle, a plug-in hybrid electric vehicle, a mobile phone, a tablet computer, a notebook computer, or the like.

To explain technical contents, construction features, and objectives and effects achieved of the technical solutions in detail, detailed descriptions are given below with reference to specific examples. It should be understood that these examples are merely used to describe this application but not to limit the scope of this application.

### Examples

### To make the invention objectives, technical solutions, and beneficial technical effects of this application clearer, this application is further described below in detail with reference to examples. However, it should be understood that the examples of this application are merely intended to explain this application, but not to limit this application, and the examples of this application are not limited to the examples given in this specification. In examples in which specific test conditions or operating conditions are not specified, preparation is performed according to conventional conditions or according to conditions recommended by a material supplier.

Polymers used in examples and comparative examples are as follows:
granular silver-coated copper powder, granular silver-coated tin powder, granular silver-coated zinc powder, granular silver-coated iron powder, granular silver-coated aluminum powder, rod-shaped (or linear) silver-coated copper powder, granular gold-coated copper powder, granular platinum-coated copper powder, and granular silver oxide-coated copper powder, all of which are commercially available.

In the following examples and comparative examples, the test method and instrument used for thickness of lithiophilic layer were: using a high-precision digimatic micrometer (MITUTOYO/293-100, Japan) for measuring the thicknesses of the current collector body and the current collector modified by the lithiophilic material respectively, and using a difference between the two as the thickness of the lithiophilic layer.

The test method and the instrument used for the average thickness of the external structure of the lithiophilic material were: using a scanning electron microscope (JEOL/JSM-IT800SHL of Japan Electronics) for observing the cross section of lithiophilic material particles, and measuring and collecting statistics of thicknesses of different positions of the particle to calculate the average thickness of the external structure.

### Example 1

### (1) Preparation of current collector

Granular silver-coated copper powder (composite structure with an internal structure and an external structure, where a material of the internal structure was copper, and the external structure was made of silver, with a proportion of silver being 10wt%) was dispersed in a concentrated sulfuric acid solution, allowing them to react for 2 h so as to obtain multiple lithiophilic materials with lithium affinity. The lithiophilic material included an internal structure and an external structure, the internal structure was a cavity, and the external structure was a granular structure. FIG. 1 is a schematic diagram of a preparation process of current collector. The multiple obtained lithiophilic materials were mixed with N-methylpyrrolidone (NMP) and polyvinylidene fluoride (PVDF) to make a conductive slurry. The slurry was applied on copper foil by using the wet film method, and then dried at 80°C for 2 h to obtain a current collector. The current collector included a current collector body and a lithiophilic layer applied on surface of the current collector body. The lithiophilic layer had a lithium affinity and included the multiple lithiophilic materials. The lithiophilic material included an internal structure and an external structure, the internal structure was a cavity, and morphology of the external structure was a microparticle structure. The thickness of the lithiophilic layer was 30 µm. The average thickness of the external structure of the lithiophilic material was 1 µm.

### (2) Preparation of battery

The current collector was directly matched with an NCM811 ternary positive electrode (with a loading amount of 3.5 mAh cm⁻²) to assemble a lithium metal pouch battery having no lithium negative electrode, with a capacity of 140 mAh and 0.4 g electrolyte injected.

### Example 2 to Example 29

The method in Example 1 was used except that different parameters as shown in Table 1 were used so as to finally obtain respective batteries.

### Comparative Example 1

As compared with Example 1, granular silver-coated copper powder (without a cavity structure) was directly mixed with NMP and PVDF to obtain a slurry. The slurry was applied on copper foil by using the wet film method, so as to obtain a current collector.

The method in step (2) of Example 1 was used to prepare a battery. The battery was tested to check performance. Results are shown in Table 1.

### Comparative Example 2

As compared with Example 1, silver was directly electroplated on the surface of copper foil to form a current collector of lithium metal battery, which was coated with a dense silver layer.

The method in step (2) of Example 1 was used to prepare a battery. The battery was tested to check performance. Results are shown in Table 1.

### Comparative Example 3

As compared with Example 1, copper foil was directly used as a current collector of lithium metal battery.

The method in step (2) of Example 1 was used to prepare a battery. The battery was tested to check performance. Results are shown in Table 1.

### Comparative Example 4

As compared with Example 1, brass foil was washed with hydrochloric acid to get rid of the zinc element in the brass so as to form a three-dimensional porous structure that serves as a current collector of lithium metal battery.

The method in step (2) of Example 1 was used to prepare a battery. The battery was tested to check performance. Results are shown in Table 1.

### Comparative Example 5

As compared with Comparative Example 4, 0.3 g electrolyte was injected, so as to obtain a current collector.

The method in step (2) of Example 1 was used to prepare a battery. The battery was tested to check performance. Results are shown in Table 1.

### Test examples

The method and conditions for testing performance of battery are as follows.

The charge and discharge capacity performance of the battery was measured using a battery tester (Land, Wuhan, China), with a test temperature of 25°C, a test voltage range of 2.8-4.3 V, a test rate current of 0.3C (42 mA) for charge, and 0.3C for discharge. A discharge capacity after the first charge-discharge cycle of the battery was a first-cycle discharge capacity. A discharge capacity after a plurality of charge-discharge cycles was a cycling discharge capacity. The number of cycles when the cycling discharge capacity was reduced to 80% of the first-cycle discharge capacity was the number of cycles of the battery.

The batteries of Examples 1 to 29 and Comparative Examples 1 to 5 were tested. Results are shown in Table 1.

**Table 1 Parameters and performance test results of current collectors and batteries in Examples 1 to 29 and Comparative Examples 1 to 5**

| | Outer coating material | Inner material | Solvent | Preparation method | Shape of outer particle | Thickness of lithiophilic layer (µm) | Thickness of outer layer (µm) | Amount of lithiophilic material (%)^{∗} | Amount of electrolyte injected (g) | Number of cycles (capacity decay to 80%) |
|---|---|---|---|---|---|---|---|---|---|---|
| Example 1 | Silver | Copper | NMP | Wet-film | Granular | 30 | 1 | 10 | 0.4 | 75 |
| Example 2 | Silver | Tin | NMP | Wet-film | Granular | 30 | 1 | 10 | 0.4 | 73 |
| Example 3 | Silver | Zinc | NMP | Wet-film | Granular | 30 | 1 | 10 | 0.4 | 72 |
| Example 4 | Silver | Iron | NMP | Wet-film | Granular | 30 | 1 | 10 | 0.4 | 74 |
| Example 5 | Silver | Aluminum | NMP | Wet-film | Granular | 30 | 1 | 10 | 0.4 | 72 |
| Example 6 | Silver | Copper | DMF | Wet-film | Granular | 30 | 1 | 10 | 0.4 | 69 |
| Example 7 | Silver | Copper | Ethanol | Wet-film | Granular | 30 | 1 | 10 | 0.4 | 71 |
| Example 8 | Silver | Copper | NMP | Pulling | Granular | 30 | 1 | 10 | 0.4 | 73 |
| Example 9 | Silver | Copper | NMP | Spin coating | Granular | 30 | 1 | 10 | 0.4 | 72 |
| Example 10 | Silver | Copper | NMP | Electrostatic spraying | Granular | 30 | 1 | 10 | 0.4 | 73 |
| Example 11 | Silver | Copper | NMP | Wet-film | Rod-shaped (linear) | 30 | 1 | 10 | 0.4 | 74 |
| Example 12 | Silver | Copper | NMP | Wet-film | Granular | 0.5 | 0.01 | 10 | 0.4 | 41 |
| Example 13 | Silver | Copper | NMP | Wet-film | Granular | 1 | 0.05 | 10 | 0.4 | 55 |
| Example 14 | Silver | Copper | NMP | Wet-film | Granular | 10 | 0.1 | 10 | 0.4 | 70 |
| Example 15 | Silver | Copper | NMP | Wet-film | Granular | 100 | 1 | 10 | 0.4 | 65 |
| Example 16 | Silver | Copper | NMP | Wet-film | Granular | 500 | 1 | 10 | 0.4 | 53 |
| Example 17 | Silver | Copper | NMP | Wet-film | Granular | 1000 | 1 | 10 | 0.4 | 45 |
| Example 18 | Silver | Copper | NMP | Wet-film | Granular | 30 | 0.01 | 10 | 0.4 | 40 |
| Example 19 | Silver | Copper | NMP | Wet-film | Granular | 30 | 0.05 | 10 | 0.4 | 58 |
| Example 20 | Silver | Copper | NMP | Wet-film | Granular | 30 | 0.1 | 10 | 0.4 | 70 |
| Example 21 | Silver | Copper | NMP | Wet-film | Granular | 30 | 2 | 10 | 0.4 | 60 |
| Example 22 | Silver | Copper | NMP | Wet-film | Granular | 30 | 4 | 10 | 0.4 | 46 |
| Example 23 | Silver | Copper | NMP | Wet-film | Granular | 30 | 1 | 0.1 | 0.4 | 44 |
| Example 24 | Silver | Copper | NMP | Wet-film | Granular | 30 | 1 | 1 | 0.4 | 69 |
| Example 25 | Silver | Copper | NMP | Wet-film | Granular | 30 | 1 | 20 | 0.4 | 54 |
| Example 26 | Silver | Copper | NMP | Wet-film | Granular | 30 | 1 | 10 | 0.3 | 57 |
| Example 27 | Gold | Copper | NMP | Wet-film | Granular | 30 | 1 | 10 | 0.4 | 67 |
| Example 28 | Platinum | Copper | NMP | Wet-film | Granular | 30 | 1 | 10 | 0.4 | 60 |
| Example 29 | Silver oxide | Copper | NMP | Wet-film | Granular | 30 | 1 | 10 | 0.4 | 70 |
| Comparative Example 1 | Silver | Copper | NMP | Wet-film | Granular | 30 | 1 | 10 | 0.4 | 36 |
| Comparative Example 2 | | | | -- | -- | -- | -- | -- | 0.4 | 37 |
| Comparative Example 3 | | | | -- | -- | -- | -- | -- | 0.4 | 10 |
| Comparative Example 4 | | | -- | -- | -- | -- | -- | -- | 0.4 | 35 |
| Comparative Example 5 | -- | -- | -- | -- | -- | -- | -- | -- | 0.3 | 28 |

| | | | | | | | | | | |
|---|---|---|---|---|---|---|---|---|---|---|
| * Amount of lithiophilic material (%) is an amount of the metal B or B oxide in the composite structure. | | | | | | | | | | |

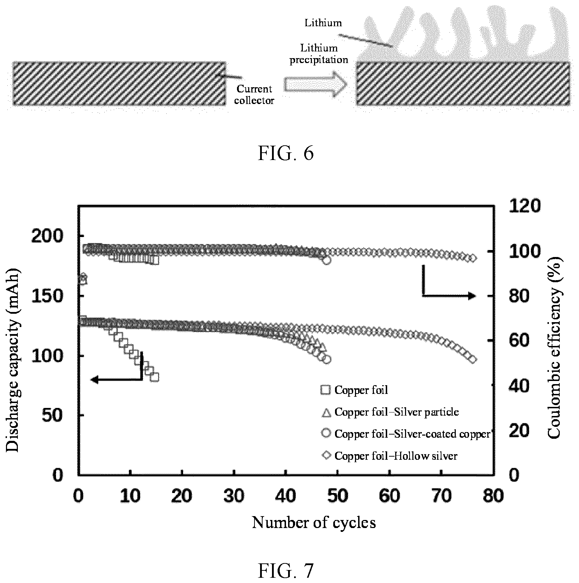

FIG. 1 is a schematic diagram of a preparation process of current collector according to Example 1 of this application. FIG. 2 is a schematic diagram of a preparation process of current collector according to Example 11 of this application. FIG. 3 shows an example of lithium being precipitated into a silver shell layer with cavity structure in a charge and discharge process of Example 1 of this application. FIG. 4 shows an example of lithium being precipitated into a silver shell layer with cavity structure in a charge and discharge process of Example 11 of this application. FIG. 5 shows an example of lithium being precipitated onto surface of silver-coated copper powder with no cavity structure in a charge and discharge process of Comparative Example 1. FIG. 6 shows an example of lithium being precipitated onto surface of a current collector and lithium dendrites being generated in a charge and discharge process of Comparative Example 3. It can be learned from FIGs. 3 to 6 that the current collector according to this application can accurately limit the space for lithium precipitation, greatly suppressing the growth of lithium dendrites, thereby significantly improving cycling performance of batteries.

FIG. 7 is a comparison diagram of performance of batteries in Example 1, Comparative Example 1, Comparative Example 2, and Comparative Example 3.

It can be learned from Table 1 and FIG. 7 that the number of cycles of the battery prepared by using the current collector of this application can be significantly increased.

It can be learned from analysis of the test results of Example 1 and Comparative Examples 1 to 4 that under the same conditions, if the current collector made of the lithiophilic material with a cavity structure of this application is used, lithium metal can be precipitated in the cavity structure during charge and discharge because of the lithium affinity of the silver shell layer. This method can accurately limit the space for lithium precipitation, greatly suppress the growth of lithium dendrites, and reduce side reactions between lithium dendrites and the electrolyte. Therefore, the number of cycles is significantly increased.

It can be learned from the test results of Examples 2 to 5 that the different inner layer materials used do not affect the mechanism of the lithiophilic layer in improving lithium precipitation, and the effects of improving battery cycling performance are basically the same.

It can be learned from the test results of Examples 6 to 10 that when different solvents or different current collector preparation processes are used, the use of lithiophilic materials with a cavity structure can still effectively improve the overall cycling performance of batteries.

It can be learned from the test results of Example 11 that the use of a lithiophilic material with a different morphology does not affect the improvement of battery performance by current collectors.

It can be learned from the test results of Examples 12 to 17 that the thickness of the lithiophilic layer has significant impact on battery performance. When the lithiophilic layer is thin, it is difficult for the lithiophilic layer to provide enough space to accommodate precipitated lithium metal, and therefore limited improvement is made in battery cycling. When the lithiophilic layer is too thick, lithium metal needs to go through a long diffusion process when lithium metal is precipitated/dissolved at the negative electrode side, resulting in increased transmission polarization, which is not conducive to stability of long-term cycling. Therefore, the thickness of the lithiophilic layer is 1-500 µm, and preferably 10-100 µm.

It can be learned from the test results of Examples 18 to 22 that different average thicknesses of the outer layer structure of the lithiophilic material cause different lithium affinities and battery performance. Because when the outer layer structure is too thin, the overall stability of the cavity structure is so poor that it is difficult to maintain morphology of the cavity for a long time in cycling, resulting in damage of the lithiophilic layer structure. When the outer layer structure is too thick, diffusion and precipitation of lithium ions are hindered, and it is even difficult for lithium metal to be precipitated into the cavity, affecting application effects of the cavity structure. Therefore, the average thickness of the external structure of the lithiophilic material is 0.05-2 µm, and preferably 0.1-1 µm.

It can be learned from the test results of Examples 23 to 25 that the amount of the lithiophilic material has significant impact on battery performance. When the amount of the lithiophilic material is too small, it is difficult to form enough lithiophilic sites, which is not conducive to the uniform precipitation and dissolution of lithium metal. When the amount of the lithiophilic material is too large, the volume of the cavity is decreased, which is not conducive to accommodation of precipitated lithium metal, and the costs of the current collector are increased, which is not conducive to large-scale application. Therefore, the amount of the lithiophilic material is 1-10wt%.

It can be learned from analysis of the test results of Example 26 and Comparative Example 5 that the amount of electrolyte injected is based on the capacity, which is about 2.8 g/Ah. The amount of electrolyte injected generally falls within a range of 2.5-3 g/Ah. When the amount of electrolyte injected is lower than 2.5 g/Ah as in Example 26 and Comparative Example 5, high cycling performance (57 cycles) can still be seen in Example 26, while poor performance (only 28 cycles) is seen in Comparative Example 5. This further indicates that the lithiophilic material with a cavity structure in this application can reduce side reactions in cycling of lithium metal batteries.

It can be learned from the test results of Example 1 and Examples 27 to 29 that all different lithiophilic materials can effectively improve lithium precipitation, and thus improve cycling performance of batteries.

It should be noted that the foregoing embodiments are merely used to explain this application, and do not constitute any limitation to this application. This application has been described with reference to typical embodiments, but it should be understood that the terms used in these embodiments are descriptive and explanatory rather than limitative. Modification may be made as prescribed to this application within the scope of the claims of this application, and amendments may be made to this application without departing from the scope and spirit of this application. Although this application described therein relates to specific methods, materials, and embodiments, it does not mean that this application is limited to specific examples disclosed in the specific methods, materials, and embodiments. On the contrary, this application can be extended to all other methods and applications having the same function.

## Claims

1. A current collector, comprising:
a current collector body; and
a lithiophilic layer applied on surface of the current collector body, wherein the lithiophilic layer has lithium affinity and comprises multiple lithiophilic materials, the lithiophilic materials comprise an internal structure and an external structure, and the internal structure is a cavity.

2. The current collector according to claim 1, wherein morphology of the external structure of the lithiophilic material is selected from one or more of granular structure, linear structure, plate structure, spherical shape, and near-spherical shape.

3. The current collector according to claim 1 or 2, wherein an average thickness of the external structure of the lithiophilic material is 0.05-2 µm, and preferably 0.1-1 µm.

4. The current collector according to any one of claims 1 to 3, wherein a material of the external structure of the lithiophilic material is metal and/or metal oxide with lithium affinity, and preferably selected from one or more of gold, silver, platinum, and silver oxide.

5. The current collector according to any one of claims 1 to 4, wherein thickness of the lithiophilic layer is 1-500 µm, and preferably 10-100 µm.

6. The current collector according to any one of claims 1 to 5, wherein the current collector body is metal foil, and preferably copper foil.

7. A preparation method of current collector, comprising the following steps:
(1) providing materials with a composite structure, wherein
the material with a composite structure has an internal structure and an external structure, a material of the internal structure is a metal A, and a material of the external structure is a metal B and/or B oxide with lithium affinity, wherein the metal A is metal copper or selected from metals whose oxidation potential is lower than the metal copper, and the metal B is selected from metals whose oxidation potential is higher than the metal A;
(2) letting multiple materials with a composite structure react with an acid solution to form multiple lithiophilic materials with lithium affinity, wherein the lithiophilic material comprises an internal structure and an external structure, and the internal structure is a cavity; and
(3) applying the multiple lithiophilic materials on surface of a current collector body.

8. The preparation method according to claim 7, wherein the metal A is selected from one or more of tin, zinc, iron, aluminum, and copper, and the metal B is one or more of gold, silver, and platinum; and
preferably, the material with a composite structure is one or more of silver-coated tin powder, silver-coated zinc powder, silver-coated iron powder, silver-coated aluminum powder, silver-coated copper powder, gold-coated tin powder, gold-coated zinc powder, gold-coated iron powder, gold-coated aluminum powder, gold-coated copper powder, platinum-coated tin powder, platinum-coated zinc powder, platinum-coated iron powder, platinum-coated aluminum powder, and platinum-coated copper powder.

9. The preparation method according to claim 7 or 8, wherein based on a total weight of the materials with a composite structure, amount of the metal B is 1wt% to 10wt%.

10. The preparation method according to any one of claims 7 to 9, wherein potential of the acid solution is between potentials of the internal structure and the external structure, and preferably selected from sulfuric acid and/or hydrochloric acid.

11. A secondary battery, comprising the current collector according to any one of claims 1 to 6 or the current collector prepared in the preparation method according to any one of claims 7 to 10.

12. An apparatus, comprising the secondary battery according to claim 11.
